# EUROPEAN PATENT SPECIFICATION

(11) **EP 2 845 480 B1**
(45) Date of publication and mention of the grant of the patent: **30.03.2022**
(21) Application number: 14184127.0
(22) Date of filing: 09.09.2014
(51) Int. Cl.: A01M 1/24, B27K 3/02, B27K 3/10

(54) **Method for controlling pests and/or fungi in a wooden construction and system therefor**
Verfahren zur Bekämpfung von Schädlingen und/oder Pilzen in einer Holzkonstruktion und System dafür
Procédé de lutte contre les parasites et/ou les champignons dans une construction en bois et système associé

(30) Priority: 10.09.2013 NL 2011420; 25.10.2013 NL 2011674
(43) Date of publication of application: 11.03.2015
(73) Proprietor: Hoekstra Heteluchtbehandeling B.V., 8406 AL Tijnje (NL)
(72) Inventor: Hoekstra, Jaap Anne, 8406 AL Tijnje (NL)
(74) Representative: Verdijck, Gerardus

(56) References cited:
- GB-A- 847 649
- GB-A- 1 128 260
- US-A- 4 724 793
- US-A- 5 620 516
- US-A1- 2009 176 020

## Description

The present invention relates to a method for controlling pests and/or fungi. The method relates more particularly to control thereof in a wooden construction, for instance a wooden bearing construction of a house, church or other building. Such fungi relate particularly to moulds and fungus species. Pests relate particularly to woodworm and the deathwatch beetle.

Methods known in practice for protecting wooden constructions, and particularly controlling pests therein, usually make use of heat by heating whole buildings and thereby killing the pests. This is a relatively expensive method, especially when applied to for instance oak constructions in listed buildings such as churches, wherein a large volume and associated mass have to be heated. It is likewise known to fumigate a construction in order to control pests, as for instance described in US 5 620 516. This is also a relatively expensive method wherein, also in view of the control agent which is used in the form of gases, the building or at least part thereof is unusable for some time. There are also health risks for users and passers-by.

It is further known to supply liquid control agents or foaming control agents to a construction. Supplying liquid control agent under pressure is for instance described in US 2009/0176020, GB 1 128 260 and GB 847 649. A problem which occurs here is having these agents penetrate to the desired locations. A further problem relates to the connections used here which usually create permanent undesired aesthetic effects. So-called plugs thus for instance usually remain behind in the construction, resulting in a permanent adverse aesthetic effect. An example of such a plug is for instance described in US 4 724 793.

The object of the present invention is to provide a method for controlling pests and/or fungi which obviates or at least reduces the above stated problems.

This object is achieved with the method for controlling pests and/or fungi in a wooden construction according to claim 1.

In the context of the present invention fungi are understood to mean moulds and fungus species, and pests are understood to mean animals which cause damage to constructions, particularly wooden constructions, such as woodworm and the deathwatch beetle. Wooden constructions are understood to mean all beams, battens, trusses or other bearing parts such as poles and pillars.

Arranging a number of supply channels with a small diameter at a mutual distance in a wooden construction makes it possible using a supply system to supply liquid control agent to and inject it into the wooden construction at a relatively low pressure for a relatively long time interval. In a currently preferred embodiment the wood will expand to some extent in the vicinity of the supply channel and thereby clamp the supply conduit to some extent. An effective supply of control agent is hereby provided.

The supply system is preferably provided with a liquid reservoir from which control agent is carried to the supply channels using a pump. By using a pump here the liquid reservoir can be placed at a desired position which is for instance easily accessible. When controlling pests and/or fungi in a roof construction of a church building, the liquid reservoir can for instance be placed on the ground floor and the agent is carried upward using a pump. In addition to the easy accessibility of the liquid reservoir and the associated advantages in respect of working conditions and safety risks, this has the additional effect that, in the case of a blockage or failure of the pump, the liquid reservoir will not drain and damage is avoided

According to the invention the supply system operates at a low system pressure of a maximum of about 3 bar, and preferably lower, and makes use here of a pump and/or gravitational force for the purpose of supplying the liquid control agent to the supply channels. In use the supply system is preferably held at a constant system pressure, irrespective of the length of the conduit. This length of the conduit can therefore be adjusted as desired. In a currently preferred embodiment a number of injectors or valves are provided here in the supply system, for instance a non-return valve for safety purposes and/or pressure valves which open only at a determined pressure in order to prevent undesired draining of for instance a reservoir with control agent. In this currently preferred embodiment the control agent is introduced by the injectors into for instance a beam under a lower injection pressure. In this embodiment the injectors provide the correct pressure for introducing the control agent into the wooden construction.

The liquid control agent is for instance a fungicide and/or an insecticide with which the fungi and/or pests in the wooden construction can be controlled. The supply system is preferably suitable for supplying control agent continuously and/or periodically in a relatively long time interval of at least one day at said relatively low pressure.

Surprisingly, it has been found that by supplying a control agent to the wooden construction for a long period of time at a low injection pressure a better injection of the control agent into the wooden construction is realized than occurs at for instance high pressures. This can probably be explained by the more natural process which occurs at the low injection pressure. In addition to a better impregnation of the wooden construction, and thereby a better pest control result, this also avoids the possibility of control agent as it were leaking out of the wooden construction due to local oversaturation or due to a shorter route, i.e. a short-cut, which is created in the wooden construction as a result of the high pressure. Damage to other parts of the building is hereby avoided. The relatively prolonged saturation of the wooden construction effects a good pest control.

A further additional advantage of the method according to the present invention is that, by employing relatively small supply channels with a diameter of a maximum of about 6 mm, the treatment in accordance with the method according to the present invention has a negligible aesthetic effect. Surprisingly, it is also found that use of these supply channels of a limited diameter enhances the gradual impregnation of control agents in a wooden construction. The number of supply channels can hereby remain limited to a centre-to-centre distance of for instance about 30-70 cm, while a good impregnation is nevertheless achieved.

In an advantageous preferred embodiment according to the present invention the injection pressure employed for the purpose of supplying and injecting control agents into wooden constructions lies in a range of 0-3 bar, preferably 0-2 bar, and most preferably 0-1 bar.

A gradual impregnation with the control agent can be realized by selecting a relatively low additional injection pressure, i.e. supply pressure, of the liquid control agent, for instance from 0.01 bar. The control agent is preferably supplied here dropwise to the wooden construction. As stated, it has been found that a substantial impregnation can be realized as a result of this supply under low pressure for a relatively long period of time of at least one day. Surprisingly, it has been found that employing a low injection pressure avoids the wood as it were being "closed off' and not absorbing control agent, or at least doing so considerably less well.

In an advantageous preferred embodiment according to the present invention the control agent is supplied for a time interval of at least one week, preferably at least three weeks, most preferably at least one month.

It has been found that a good impregnation of the wooden construction is realized by supplying control agent at the above discussed, preferably very low injection pressure of for instance 1 or 2 bar for a longer period of time. As stated, this impregnation is surprisingly better than in systems operating under high pressure and pumping the control agent into the wooden construction. It has been found advantageous to supply control agent for a period of longer than a month in order to thereby adequately control the fungi and/or pests.

In a currently advantageous embodiment according to the invention the supply channels are arranged at a centre-to-centre distance in the range of 10-70 cm, preferably in the range of 40-60 cm, and most preferably of about 50 cm. It has been found that a centre-to-centre distance of about 50 cm usually suffices for most wooden constructions, including oak constructions of a roof construction. It will be apparent that the exact distances also depend on the dimensions of the roof construction and the structural parts thereof to be treated.

In a currently preferred embodiment according to the present invention the diameter of the supply channels is envisaged as being smaller than 5 mm, preferably a maximum of 4 mm. These relatively small diameters, preferably in combination with the above stated centre-to-centre distances, have no permanent adverse aesthetic effects on the treated construction parts.

In an advantageous preferred embodiment according to the present invention the supply channel is arranged along at least half the width or thickness of the wooden construction, preferably about three-quarters along the width or thickness.

Providing the supply channel over a considerable length in the wooden construction achieves that all cavities made by pests in this wooden construction are reached by the control agent. The deathwatch beetle is for instance known for realizing cavities in a wooden construction. By providing a supply channel over preferably about three-quarters of the width or thickness of the wooden construction such cavities are actually reached by the control agent, so that the pest control can be carried out effectively. A negligible effect on the bearing capacity of a wooden construction is hereby guaranteed, particularly in combination with the small supply channel diameters of a maximum of 5 and preferably a maximum of 4 mm. An effective pest control is hereby realized.

In an advantageous embodiment according to the present invention the pests relate to animals from the Coleoptera order. Included herein are for instance the longhorn beetle family, including the old-house borer. The pests preferably relate to the Anobiidae family. Included in this family are the so-called wood borers, such as the common woodworm or furniture beetle. The pests more preferably relate to the deathwatch beetle, also referred to as knock beetle. It has been found that control of pests on the wooden construction using the method according to the invention is particularly effective for the so-called Anobiidae, and particularly for the deathwatch beetle.

In a further advantageous preferred embodiment according to the present invention the method comprises the step of measuring the degree of saturation of the wooden construction with control agent and optionally adjusting the supply of the control agent on the basis of the obtained measurement.

Measuring the degree of saturation, for instance with a moisture sensor for instance using electrical resistance and/or electromagnetic principles, can give an indication of the degree of impregnation of the wooden construction with the control agent. The supply system can be adjusted on the basis hereof, for instance by changing the pressure at which and/or period of time for which the control agent is supplied. This provides a check on the supply of control agent to a wooden construction. It is in addition possible to perform such an adjustment automatically on the basis of a measurement by making use of a control system and/or to generate a notification to a user or installer or pest controller such that they can assess whether other adjustments of the supply system are required. An effective control of fungi and/or pests is hereby realized.

The invention further relates to a system for performing the method as described above.

Such a system provides the same effects and advantages as described above for the method.

Further advantages, features and details of the invention are elucidated on the basis of the preferred embodiments thereof, wherein reference is made to the accompanying drawings, in which:
- Figure 1 shows a view of a pest control system according to the invention; and

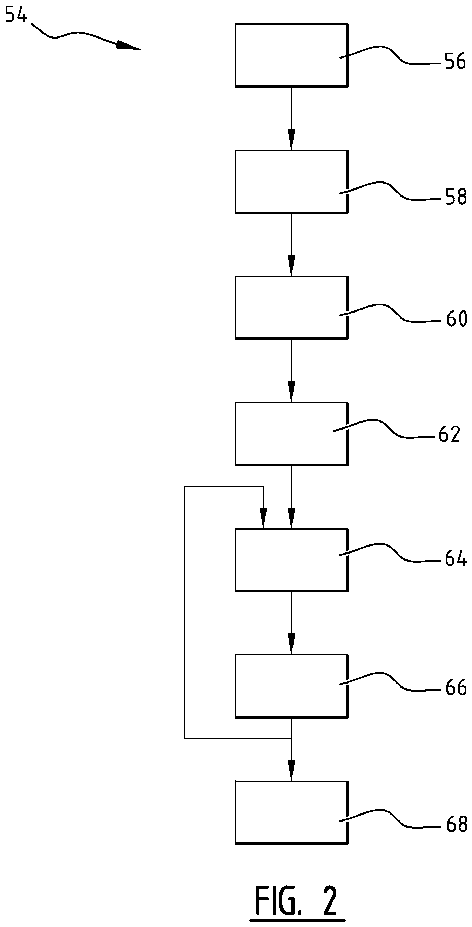

- Figure 2 shows a schematic representation of the method applied for the system of Figure 1.

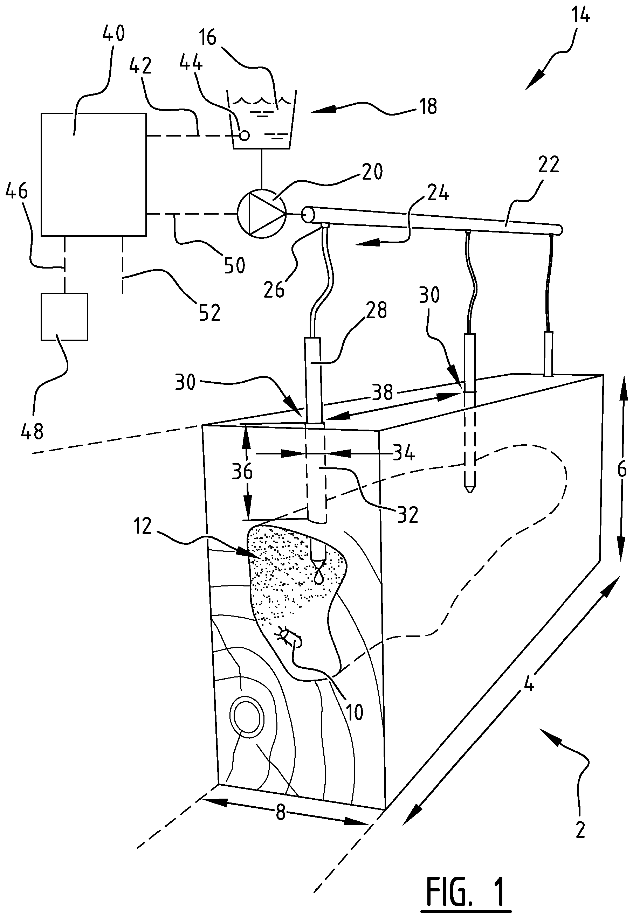

Beam 2 (Figure 1), having a length 4, height 6 and thickness 8, is being attacked in the shown embodiment by a beetle 10. Beetle 10 has made a cavity 12 in beam 2. Cavity 12 weakens beam 2 such that pest control of the beetle is required. For control of beetle 10 use is made of supply system 14 with which control agent 16 is carried from a reservoir 18 to distribution pipe or supply conduit 22 using pump 20. Pipe or conduit 22 is provided at diverse locations with branches 24, wherein use is made in the shown embodiment of injector or valve 26. Via injector 26 liquid is carried via supply channel 24 to infeed tube 28 which is connected to hole 30 of channel 32 arranged in beam 2. Channel 32 is provided with diameter 34 with depth or length 36 such that cavity 12 is in any case reached. In the shown embodiment diameter 34 is about 2-3 mm and holes 30 are provided at a centre-to-centre distance 38 of about 50 cm.

In the shown embodiment injector 26 opens at a pressure of about 2 bar applied by pump 20. In supply conduit 28 control agent 16 is supplied dropwise via supply channel 32 to beam 2 at a low injection pressure.

In the shown embodiment supply system 14 is further provided with a controller 40 which receives measurement signal 42 from a liquid meter 44 arranged in reservoir 18. In the shown embodiment controller 40 also receives a measurement signal 46 from moisture sensor 48 as indication of the degree of impregnation of beam 2 by control agent 16. Controller 40 can further adjust pump 20 using control signal 50 and/or give the user or pest controller an indication of the current situation using warning signal 52 and/or generate a warning notification.

Process 54 for controlling fungi and/or pests starts with detection step 56, in which pests and/or fungi are detected. Holes are then made at desired locations in drilling step 58, and supply system 14 is installed in installation step 60. In initiation step 62 reservoir 18 is filled with liquid control agent 16, after which liquid 16 is supplied to beam 2 in activation step 64. Monitoring step 66 provides for monitoring, measuring and/or checking of the supply to beam 2 by supply system 14. Monitoring step 66 can be performed continuously and/or periodically and is preferably actively applied in order to modify supply step 64 where necessary. After a time the pest control is finished and beam 2 is delivered in completion step 68.

In an experiment control agent 16 was supplied to a beam 2 along a length of about 40 metres for a period of three weeks. Used here were about 80 injectors 26 which were connected to holes 30 using conduits 28. Monitoring step 66 was performed here every two days using visual inspection and/or sensor measurements. It was found that an effective pest control was hereby realized without damaging construction 2 and/or the building in which construction 2 was provided.

In the described experiment use was made of a beam of about 1.5 metres in length, about 20-25 cm in width and with a thickness of about 10 cm. The measured usage was about 3-4 litres of control agent 16 in a period of five to six weeks.

The operation of the method and the system has been demonstrated here in further experiments. It has been found here that employing a relatively low pressure for introduction of the control agent into the wooden construction under the above stated conditions results in a good saturation of the wooden construction with the control agent. A quantity of control agent 16 of about 5-6 litres per metre of length is supplied here. It was found during the experiments that when control agent 16 is supplied under relatively low pressure according to the present invention a better saturation occurs than compared to conventional methods. The experiments have shown particularly here that the treated wood is not "closed off' and can therefore absorb no, or at least less, agent 16. The present invention hereby provides a good and effective pest control.

Other further experiments have shown that harder types of wood, for instance hard oak, can also be treated according to the invention. It has been found here that effective pest control results can be achieved particularly with the combination of a relatively low injection pressure and a relatively long treatment period.

In another embodiment of supply system 14 branches 24 with injectors or valves 26 are placed in a separate housing, or a type of hub. Control agent 16 is carried from the housing to infeed tubes 28 at hole 30 of channel 32 arranged in beam 2. It is also possible here to connect a plurality of infeed tubes 28 per injector 26, for instance four tubes 28 to one injector 26. It is also possible to embody pump 20 as a hand pump. This increases the flexibility of supply system 14.

The present invention is by no means limited to the above described embodiments thereof. The rights sought are defined by the following claims, within the scope of which many modifications can be envisaged. In addition to the shown application of controlling beetles 10, it is expressly also possible to control other types of fungi, particularly to control fungus species. In an alternative application of supply system 14, system 14 can be applied to a wall or partition construction for the purpose of controlling so-called dry rot. It is advantageous here relative to the usual methods of pest control that relatively small holes 30 with a diameter 34 of about 6 mm can suffice in this application. Less damage is hereby caused, while the fungicide can be supplied in effective manner. It is alternatively or additionally possible to treat such a wall or partition construction for rising damp, or to otherwise inject walls with a treatment agent and/or protective agent. In a further alternative application of system 14 the supply system can also be used to harden beam 2, for instance by using an epoxy material.

## Claims

1. Method for controlling pests and/or fungi in a wooden construction (2), **characterized by** the steps of:
- arranging a number of supply channels (24) with a diameter of a maximum of 6 mm at a centre-to-centre distance of at least about 5 cm in the wooden construction;
- connecting the supply channels to a liquid reservoir (18) using a supply system (14); and
- supplying a liquid control agent (16) to the supply channel either at an injection pressure between 0-3 bar or by means of the gravitational force at an injection pressure of 0 bar, and;
- continuously supplying the liquid control agent at the injection pressure for a time interval of more than one day, and injecting the liquid control agent into the wooden construction for the purpose of providing a prolonged saturation.

2. Method as claimed in claim 1, wherein the injection pressure lies in the range between 0-2 bar.

3. Method as claimed in claim 2, wherein the injection pressure lies in the range between 0-1 bar.

4. Method as claimed in claim 2 or 3, wherein supply of the control agent (16) is performed dropwise.

5. Method as claimed in one or more of the foregoing claims, wherein the control agent is supplied for a time interval of at least one week, preferably at least three weeks.

6. Method as claimed in claim 5, wherein the control agent is supplied for a time interval of at least one month.

7. Method as claimed in one or more of the foregoing claims, wherein the supply channels are arranged at a centre-to-centre distance in the range of 10-70 cm, preferably in the range of 40-60 cm, and most preferably of about 50 cm.

8. Method as claimed in one or more of the foregoing claims, wherein the diameter of the supply channels amounts to a maximum of 5 mm, and preferably a maximum of 4 mm.

9. Method as claimed in one or more of the foregoing claims, wherein the supply channel is arranged along at least half the width or thickness of the wooden construction, preferably along about three-quarters of the width or thickness.

10. Method as claimed in one or more of the foregoing claims, wherein the pests relate to the Coleoptera order.

11. Method as claimed in claim 10, wherein the pests relate to the family of the Anobiidae.

12. Method as claimed in claim 11, wherein the pests relate to the deathwatch beetle.

13. Method as claimed in one or more of the foregoing claims, further comprising the step of measuring the degree of saturation of the wooden construction with control agent and optionally adjusting the supply of the control agent on the basis of the obtained measurement.

14. Pest control system for controlling pests and/or fungi in a wooden construction, the system comprising:
- a reservoir (18);
- a supply system (14) that is connected to the reservoir (18) and that comprises:
- a supply conduit (22) provided with branches (24);
- a pump (20) for carrying control agent (16) from reservoir (18) to distribution pipe or supply conduit (22);
- injectors (26) that are configured to open at a pressure of about 2 bar applied thereto by pump (20);
wherein each injector (26) is attached to an associated branch (24) and an infeed tube (28) which is configured to be connected to hole (30) or channel (32) of a beam (2) and to, in use, dropwise supply control agent (16) to beam (2) at a low injection pressure; and
wherein the supply system (14) is further provided with a controller (40) configured to receive a measurement signal (42) from a liquid meter (44) arranged in reservoir (18); and
wherein controller (40) is configured to receive a measurement signal (46) from a moisture sensor (48) as indication of the degree of impregnation of beam (2) by control agent (16); and
wherein controller (40) preferably is configured to:
- adjust pump (20) using a control signal (50); and/or
- to give the user or pest controller an indication of the current situation using warning signal (52); and/or
- to generate a warning notification;
and wherein the system is configured to be used in a method according to any one of the preceding claims.

## Patentansprüche

1. Verfahren zur Bekämpfung von Schädlingen und/oder Pilzen in einer Holzkonstruktion (2), **gekennzeichnet durch** die folgenden Schritte:
- Anordnen einer Anzahl von Zufuhrkanälen (24) mit einem Durchmesser von maximal 6 mm und mit einem Mittenabstand von mindestens etwa 5 cm in der Holzkonstruktion;
- Verbinden der Zufuhrkanäle mit einem Vorratsbehälter (18) unter Verwendung eines Zufuhrsystems (14); und
- Zuführen eines flüssigen Bekämpfungsmittels (16) in den Zufuhrkanal entweder mit einem Einspritzdruck zwischen 0 und 3 bar oder mittels der Gravitationskraft mit einem Einspritzdruck von 0 bar und;
- kontinuierliches Zuführen des flüssigen Bekämpfungsmittels bei dem Einspritzdruck für ein Zeitintervall von mehr als einem Tag, und Einspritzen des flüssigen Bekämpfungsmittels in die Holzkonstruktion zum Zweck, eine verlängerte Sättigung zu erreichen.

2. Verfahren nach Anspruch 1, wobei der Einspritzdruck im Bereich zwischen 0 und 2 bar liegt.

3. Verfahren nach Anspruch 2, wobei der Einspritzdruck im Bereich zwischen 0 und 1 bar liegt.

4. Verfahren nach Anspruch 2 oder 3, bei dem die Zufuhr des Bekämpfungsmittels (16) tropfenweise erfolgt.

5. Verfahren nach einem oder mehreren der vorstehenden Ansprüche, wobei das Bekämpfungsmittels über einen Zeitraum von mindestens einer Woche, vorzugsweise von mindestens drei Wochen, zugeführt wird.

6. Verfahren nach Anspruch 5, wobei das Bekämpfungsmittel über einen Zeitraum von mindestens einem Monat zugeführt wird.

7. Verfahren nach einem oder mehreren der vorhergehenden Ansprüche, wobei die Zufuhrkanäle in einem Mittenabstand im Bereich von 10-70 cm, vorzugsweise im Bereich von 40-60 cm und am meisten bevorzugt bei etwa 50 cm angeordnet sind.

8. Verfahren nach einem oder mehreren der vorhergehenden Ansprüche, wobei der Durchmesser der Zufuhrkanäle maximal 5 mm, vorzugsweise maximal 4 mm, beträgt.

9. Verfahren nach einem oder mehreren der vorhergehenden Ansprüche, wobei der Zufuhrkanal über mindestens die Hälfte der Breite oder Dicke, vorzugsweise über etwa drei Viertel der Breite oder Dicke, der Holzkonstruktion angeordnet ist.

10. Verfahren nach einem oder mehreren der vorhergehenden Ansprüche, wobei die Schädlinge der Ordnung der Coleoptera angehören.

11. Verfahren nach Anspruch 10, wobei die Schädlinge aus der Familie der Anobiidae stammen.

12. Verfahren nach Anspruch 11, wobei es sich bei den Schädlingen um den Klopfkäfer handelt.

13. Verfahren nach einem oder mehreren der vorhergehenden Ansprüche, umfassend ferner den Schritt des Messens des Sättigungsgrades der Holzkonstruktion mit Bekämpfungsmittel und gegebenenfalls des Einstellens der Zufuhr des Bekämpfungsmittels auf der Grundlage der erhaltenen Messung.

14. Schädlingsbekämpfungssystem zur Bekämpfung von Schädlingen und/oder Pilzen in einer Holzkonstruktion, wobei das System umfasst:
- einen Vorratsbehälter (18);
- ein Zufuhrsystem (14), das mit dem Vorratsbehälter (18) verbunden ist und Folgendes aufweist:
- eine Zufuhrleitung (22), die mit Abzweigungen (24) versehen ist;
- eine Pumpe (20) zum Fördern des Bekämpfungsmittels (16) aus dem Vorratsbehälter (18) in das Verteilerrohr oder die Zufuhrleitung (22);
- Injektoren (26), die dazu eingerichtet sind, sich bei einem Druck von etwa 2 bar zu öffnen, der von der Pumpe (20) beaufschlagt wird;
wobei jeder Injektor (26) an einer zugehörigen Abzweigung (24) und einem Zuführungsrohr (28) angebracht ist, das dazu eingerichtet ist, mit einem Loch (30) oder einem Kanal (32) eines Balkens (2) verbunden zu werden, und im Gebrauch Bekämpfungsmittel (16) tropfenweise mit einem niedrigen Einspritzdruck in den Balken (2) einzuspeisen; und
wobei das Zufuhrsystem (14) ferner mit einer Steuerung (40) versehen ist, die dazu eingerichtet ist, ein Messsignal (42) von einem im Vorratsbehälter (18) angeordneten Flüssigkeitsmesser (44) zu empfangen; und
wobei die Steuerung (40) dazu eingerichtet ist, ein Messsignal (46) von einem Feuchtigkeitssensor (48) als Anzeige des Grades der Imprägnierung des Balkens (2) durch das Bekämpfungsmittel (16) zu empfangen; und
wobei die Steuerung (40) vorzugsweise dazu eingerichtet ist:
- die Pumpe (20) mittels eines Steuersignals (50) einzustellen; und/oder
- dem Benutzer oder Schädlingsbekämpfer einen Hinweis auf die aktuelle Situation mittels eines Warnsignals (52) zu geben; und/oder
- eine Warnmeldung zu erzeugen;
und wobei das System dazu eingerichtet ist, in einem Verfahren nach einem der vorangehenden Ansprüchen verwendet zu werden.

## Revendications

1. Procédé de contrôle de parasites et/ou de champignons dans une construction en bois (2), **caractérisé par** les étapes de :
agencement d'un certain nombre de canaux d'alimentation (24) avec un diamètre de 6 mm au maximum à une distance de centre à centre supérieure ou égale à 5 cm environ dans la construction en bois ;
raccordement des canaux d'alimentation à un réservoir de liquide (18) en utilisant un dispositif d'alimentation (14) ; et
distribution d'un agent de contrôle liquide (16) au canal d'alimentation soit à une pression d'injection comprise entre 0 et 3 bars soit par gravité à une pression d'injection de 0 bar, et ;
distribution en continu de l'agent de contrôle liquide à la pression d'injection pour un intervalle de temps supérieur à un jour, et injection de l'agent de contrôle liquide dans la construction en bois dans le but d'assurer une saturation prolongée.

2. Procédé selon la revendication 1, dans lequel la pression d'injection est comprise dans la plage entre 0 et 2 bars.

3. Procédé selon la revendication 2, dans lequel la pression d'injection est comprise dans la plage entre 0 et 1 bar.

4. Procédé selon la revendication 2 ou 3, dans lequel la distribution de l'agent de contrôle (16) est mise en œuvre par goutte-à-goutte.

5. Procédé selon une ou plusieurs des revendications précédentes, dans lequel l'agent de contrôle est distribué pour un intervalle de temps supérieur ou égal à une semaine, de préférence, supérieur ou égal à trois semaines.

6. Procédé selon la revendication 5, dans lequel l'agent de contrôle est distribué pour un intervalle de temps supérieur ou égal à un mois.

7. Procédé selon une ou plusieurs des revendications précédentes, dans lequel les canaux d'alimentation sont agencés à une distance de centre à centre comprise dans la plage de 10 à 70 cm, de préférence, dans la plage de 40 à 60 cm et, plus préférablement, égal à 50 cm environ.

8. Procédé selon une ou plusieurs des revendications précédentes, dans lequel le diamètre des canaux l'alimentation s'élève à un maximum de 5 mm et, de préférence, à un maximum de 4 mm.

9. Procédé selon une ou plusieurs des revendications précédentes, dans lequel le canal d'alimentation est agencé suivant au moins la moitié de la largeur ou de l'épaisseur de la construction en bois, de préférence, suivant les trois quarts environ de la largeur ou de l'épaisseur.

10. Procédé selon une ou plusieurs des revendications précédentes, dans lequel les parasites se rapportent à l'ordre des coléoptères.

11. Procédé selon la revendication 10, dans lequel les parasites se rapportent à la famille des Anobiidae.

12. Procédé selon la revendication 11, dans lequel les parasites se rapportent au scarabée de la mort.

13. Procédé selon une ou plusieurs des revendications précédentes, comprenant, en outre, l'étape de mesure du degré de saturation en agent de contrôle de la construction en bois et, en variante, d'ajustement de la distribution de l'agent de contrôle sur la base de la mesure obtenue.

14. Dispositif de contrôle de parasites destiné à contrôler des parasites et/ou les champignons dans une construction en bois, le dispositif comprenant :
un réservoir (18) ;
un dispositif d'alimentation (14) qui est raccordé au réservoir (18) et qui comprend :
un conduit d'alimentation (22) comportant des branches (24) ;
une pompe (20) destinée à transférer l'agent de contrôle (16) à partir du réservoir (18) vers la tuyauterie de distribution ou le conduit d'alimentation (22) ;
des injecteurs (26) qui sont configurés de manière à s'ouvrir à une pression de 2 bars environ, qui est appliquée sur ceux-ci par la pompe (20) ;
dans lequel chaque injecteur (26) est fixé sur une branche (24) associée et un tube d'entrée (28) qui est configuré de manière à être raccordé à un orifice (30) ou canal (32) d'une poutrelle (2) et, en utilisation, à délivrer en goutte-à-goutte de l'agent de contrôle (16) à la poutrelle (2) sous une faible pression d'injection ; et
dans lequel le dispositif d'alimentation (14) comporte, en outre, une unité de commande (40) configurée de manière à recevoir un signal de mesure (42) à partir d'un débitmètre de liquide (44) agencé dans le réservoir (18) ; et
dans lequel l'unité de commande (40) est configurée de manière à recevoir un signal de mesure (46) d'un capteur d'humidité (48) en tant qu'indication du degré d'imprégnation de la poutrelle (2) par l'agent de contrôle (16) ;et
dans lequel l'unité de commande (40) est, de préférence, configurée de manière à :
ajuster la pompe (20) en utilisant un signal de commande (50) ; et/ou
donner à l'utilisateur ou à l'unité de commande de parasite une indication de la situation actuelle en utilisant le signal d'alarme (52) ; et/ou
à produire une notification d'alerte ;
et dans lequel le dispositif est configuré de manière à être utilisé dans un procédé selon l'une quelconque des revendications précédentes.
